# EUROPÄISCHE PATENTSCHRIFT

(11) **EP 1 161 665 B1**
(45) Veröffentlichungstag und Bekanntmachung des Hinweises auf die Patenterteilung: **22.10.2003**
(21) Anmeldenummer: 00917085.3
(22) Anmeldetag: 16.02.2000
(51) Int. Cl.: G01N 1/22, G01N 1/24

(54) **VERFAHREN UND VORRICHTUNG ZUR PROBENAHME AUS ABGASEN**
METHOD AND DEVICE FOR TAKING SAMPLES FROM EXHAUST GASES
PROCEDE ET DISPOSITIF PERMETTANT DE PRELEVER DES ECHANTILLONS DE GAZ D'ECHAPPEMENT

(30) Priorität: 10.03.1999 DE 19910626
(43) Veröffentlichungstag der Anmeldung: 12.12.2001
(73) Patentinhaber: BM Becker Messtechnik GmbH, 71364 Winnenden (DE)
(72) Erfinder: RENTSCHLER, Werner, D-71332 Waiblingen (DE); BECKER, Ernst, D-73663 Berglen (DE)
(74) Vertreter: Alber, Norbert, Dipl.-Ing.
(86) Internationale Anmeldenummer: EP0003488
(87) Internationale Veröffentlichungsnummer: WO00054022

(56) Entgegenhaltungen:
- EP-A- 0 324 330
- EP-A- 0 582 840
- DE-A- 3 305 232
- DE-A- 4 205 792
- DE-A- 4 205 793
- DE-A- 19 642 146
- DE-B- 2 950 744
- DE-U- 29 702 315

## Beschreibung

### I. Anwendungsgebiet

Die Erfindung betrifft ein Verfahren sowie eine Vorrichtung zur Probenahme aus Abgasen, die mittel- und schwerflüchtige Substanzen wie etwa mehrfach chlorierte Dioxine und Furane, insbesondere PCDD und PCDF enthalten, und zwar in einer Gas-oder Aerosolphase und in einer Staubphase.

### II. Technischer Hintergrund

Derartige Verfahren sind beschrieben in der VDI-Richtlinie 3499 sowie in der DIN-EN 1948. Das in diesem Zusammenhang entwickelte Praxisverfahren ist unter dem Namen LAGA-Verfahren bekannt geworden.

Mit Hilfe dieser Verfahren werden die Abgase aus unterschiedlichsten Anlagen, nämlich von Automotoren über Deponiegasanlagen bis zu Sondermüllverbrennungsanlagen und Crack-Anlagen, untersucht. Die Meßgastemperaturen können dabei in einem weiten Bereich von -20°C bis 1000°C schwanken. Auch die Wassergehalte und Staubkonzentrationen variieren in einem weiten Bereich.

Nachteilig bei dem vorerwähnten LAGA-Verfahren und auch einem analog arbeitenden, aus USA bekannten, Meßverfahren ist, daß dabei eine größere Anzahl unterschiedlicher Teilproben anfällt, in denen sich die zu untersuchenden Dioxine und Furane befinden können, nämlich beispielsweise
- die Staubfilterkartusche
- die Adsorberkartusche
- das vor den Kartuschen abgeschiedene Kondensat.

Die übrigen mit dem kontaminierten Gas in Verbindung stehenden Teile wie Entnahmesonde und bis zu den Kartuschen führende Rohrleitungen können bei den hier angestrebten Langzeit-Probenahmen außer Betracht bleiben, da die Zu- und Abfuhr mit Dioxinen und Furanen auf deren Oberflächen bei etwa konstantem zugrunde liegenden Prozeß gleichmäßig sein dürfte und die Beeinflussung der in den Kartuschen erfolgten Aufsummierung an Dioxinen und Furanen bei einem Prozent oder darunter liegt

Somit ist es bei den vorbeschriebenen Verfahren nachteilig, die drei unterschiedlichen Teilproben durch labormäßige Bearbeitung in eine einzige Probe umwandeln zu müssen und deren Gesamt-Gehalt an den zu untersuchenden Stoffen (Dioxine und/oder Furane) zu bestimmen.

Dieser Nachteil ist bereits durch ein Verfahren von Herm Michael Kraft, beschrieben in dessen Diplomarbeit von 1986 "Untersuchungen zur Standardisierung von Probenahmentechnik und Analytik von polychlorierten Dibenzodioxinen und Dibenzofuranen in Abgasen von Abfallverbrennungsanlagen", erarbeitet an der Universität Tübingen, vermieden, indem dort bereits vorgeschlagen wird, vor den Kartuschen den Anfall von - dann schadstoffbelastetem - Kondensat zu vermeiden.

Zu diesem Zweck wird dort die Temperaturhaltung, bzw. bei Bedarf notwendige Nachheizung, des aus dem Abgas abgezweigten Teilstromes vor Aufleiten auf die Kartuschen auf mindestens 90°C vorgeschlagen.

Dies bewirkt, daß als zu untersuchende Teilproben nur noch die Staubfilterkartusche und die von einer Gas- bzw. Aerosolphase der zu untersuchenden Stoffe durchdrungene Adsorberkartusche anfallen. Dadurch wurden überhaupt erst Langzeitmessungen über vier bis sechs Wochen möglich, da die in diesen Zeiträumen bei der Ermittlung z. B. nach der LAGA-Methode anfallenden kontaminierten Kondensatmengen ein so großes Volumen aufweisen würden, daß dies hinsichtlich der Zwischenspeicherung am Entstehungsort bereits erhebliche Probleme aufwerfen würde.

Die Vorgehensweise nach Herrn Kraft weist jedoch den Nachteil auf, daß durch die zusätzliche und starke Aufheizung des abgeschiedenen Teilstromes auf hohe Temperaturen vor Einleiten in die Kartuschen nicht sichergestellt ist, daß in den Kartuschen noch der gleiche Gehalt bzw. die Zusammensetzung der zu untersuchenden Stoffe gemessen wird, wie sie im zu untersuchenden Abgasstrom vorhanden waren, da durch die zusätzlich eingebrachte Energie Reaktionen, insbesondere chemische Umwandlungen und insbesondere Oxidationsvorgänge an den zu untersuchenden Stoffen auftreten können, die im Original-Abgasstrom so mangels starker Zuheizung nicht auftreten.

Darüber hinaus ist bei Kraft nicht beschrieben, wie das Verfahren durch zusätzliche Maßnahmen sicher in den erzielten Ergebnissen und einfach in seiner Handhabung an der Anfallstelle der Rauchgase gemacht werden kann, insbesondere kostengünstig hinsichtlich der Durchführung der Probenahmen und der Aufstellorte der einzelnen Aggregate.

Die DE-42 05 792 A beschreibt ein Verfahren und eine Vorrichtung zur Probennahme aus Abgasen, die mittel- und schwerflüchtige Substanzen, insbesondere PCDD und PCDF in einer Gas-, Feststoff- oder Aerosolphase enthalten, wobei ein Gasteilstrom aus dem Abgas abgeleitet und nacheinander über eine Staubfilterkartusche und eine Adsorberkartusche geleitet wird, wobei der Teilstrom keine Aufheizung erfährt. Dabei ist auch ein Vorfilter verwendbar.

### III. Darstellung der Erfindung

### a) Technische Aufgabe

Es ist die Aufgabe der Erfindung, ein verbessertes Verfahren sowie eine Vorrichtung zur Durchführung des Verfahrens zur verbesserten Probenahme aus Abgasen anzugeben.

### b) Lösung der Aufgabe

Die oben genannte Aufgabe wird durch die kennzeichnenden Merkmale der unabhängigen Verfahrensansprüche 1 und 2 sowie der unabhängigen Vorrichtungsansprüche 11 und 12 gelöst. Vorteilhafte Ausführungsformen ergeben sich aus den Unteransprüchen.

Bei dem erfindungsgemäßen Verfahren wird durch Verzicht auf Aufheizung des Teilstromes vor den Kartuschen bzw. durch nur geringes Aufheizen und Abkühlung vor den Kartuschen und sogar die generelle Kühlung dieses Teilstromes zwar unter Umständen ein Kondensat stromaufwärts dieser Kartuschen erzeugt, dieses Kondensat wird jedoch mit dem Gas-Teilstrom durch die Kartuschen transportiert, so daß nach wie vor nur diese beiden Kartuschen als zu untersuchende Teilproben anfallen.

Dabei sind zwei unterschiedliche, vom Staubgehalt des zu untersuchenden Gasstromes abhängige, Situationen zu unterscheiden:

Sofern das zu untersuchende Gas nicht mehr als ca. 10 mg Staub pro m³ enthält, kann der abgezweigte Gas-Teilstrom ohne Vorfilterung direkt auf die Staubfilterkartusche und Adsorberkartusche geleitet werden, da der Staubanteil so gering ist, daß der Staubfilter auch bei einer Langzeitmessung von ca. 6 Wochen noch nicht zu stark zugesetzt wäre. Bei stärkerer Staubbefrachtung, insbesondere von mehr als 10 mg Staub pro m³, etwa 100 mg Staub pro m³ wie etwa bei einem Stahlwerk, wäre die Staubfilterkartusche nach kürzester Zeit zugesetzt. Es ist dann notwendig, einen konventionellen Staub-Vorfilter, meist in Form eines gängigen Papier-Filters z.B. in Form eines Torus mit rechteckigem Querschnitt etc. zu verwenden, der dann zwischen der Abgassonde und den Kartuschen angeordnet wird. Da derartige Vorfilter nur im trockenen Zustand funktionieren und im feuchten bzw. naßen Zustand sehr schnell zusetzen, muß sichergestellt sein, daß der hindurchgeführte Gas-Teilstrom nicht vor oder in dem Vorfilter kondensiert. Um dies zu vermeiden ist vorzugsweise eine Heizung im bzw. vor dem Vorfilter vorgesehen.

Im Gegensatz zur idealen Lösung, bei der kein Vorfilter benötigt wird und damit auch überhaupt keine Aufheizung des Teilstromes vor den Kartuschen stattfindet, ist hier die Aufheizung zum Teil unvermeidbar, wird jedoch so gering wie möglich gehalten. Insbesondere wird der Gasteilstrom nicht über 120°C aufgeheizt.

Dadurch wird zwar de facto kein für den Original-Abgasstrom relevanter Teilstrom untersucht, jedoch wird vermieden, den Teilstrom zu stark aufzuheizen, insbesondere in einem Temperaturbereich, in dem ein Zerfall der zu untersuchenden Dioxine und Furane auftreten kann. Zusätzlich wird vorzugsweise nach dem Vorfilter und vor Erreichen der Kartuschen eine Kühlung des Teilstromes durchgeführt.

Weiterhin wird, um die Aufheizung möglichst gering zu halten, der Vorfilter möglichst unmittelbar nach der Sonde angeordnet, insbesondere am hinteren Ende des Sondenrohres, um die Abkühlmöglichkeiten des Teilstromes entlang des Strömungsweges möglichst gering zu halten und damit die notwendige Aufheizung ebenfalls möglichst gering zu halten. Vorzugsweise wird das gesamte Sondenrohr, von der Eintrittsöffnung bis zum Übergang in den Vorfilter, beheizt, und zwar nur so viel, daß eine Konstanthaltung der Temperatur des Teilstromes vom Eintritt in die Sonde an gegeben ist.

Hinsichtlich Art und Höhe der Aufheizung sind wiederum zwei Unterfälle zu unterscheiden, je nachdem, ob der bei ca. 105°C liegende Taupunkt von den zu untersuchenden Rauchgasen unter- oder überschritten wird.

Sofern die Temperatur der Rauchgase, aus denen die Sonde einen Teilstrom entnimmt, höher liegt, beispielsweise bei einer Rauchgastemperatur von 180°C, ist es ausreichend, den Vorfilter selbst auf einer Temperatur knapp oberhalb der Taupunkttemperatur, also bei etwa 115°C, durch Beheizung zu halten.

Liegt die Temperatur der Rauchgase jedoch unter der Temperatur des Taupunktes, beispielsweise bei etwa 60°C, so ist zumindest bei größeren Temperaturdifferenzen zwischen Rauchgas- und Taupunkttemperatur die Beheizung des Vorfilters alleine auf beispielsweise 115°C nicht ausreichend, denn die den Vorfilter mit einer Temperatur deutlich unter der Taupunkttemperatur erreichenden Rauchgase würden unter Umständen am Beginn des Vorfilters noch keine über dem Taupunkt liegende Temperatur aufweisen und damit den Vorfilter durch Verkleben blockieren. Dies könnte zwar durch sehr viel höhere Aufheizung des Vorfilters auf 200°C oder noch höher vermieden werden, jedoch steigt dann das Risiko einer Veränderung der chemischen Zusammensetzung des zu untersuchenden Gas-Teilstromes.

Für diesen Fall wird deshalb die zusätzliche Beheizung des Sondenrohres auf ebenfalls einer knapp über dem Taupunkt liegenden Temperatur, etwa wiederum etwa 115°C, bevorzugt. Dadurch ist sichergestellt, daß die Rauchgase des Teilstromes auf ihrem Weg durch das Sondenrohr bereits eine Temperatur oberhalb des Taupunktes erreichen, die dann durch die Beheizung des Vorfilters auch sicher gehalten wird.

Da im Falle eines Vorfilters der Filter selbst - ebenso wie die Kartuschen - Dioxine und Furane enthält, muß auf die Möglichkeit eines einfachen und verlustsicheren Austauschs der Filterpatrone geachtet werden.

Zu diesem Zweck ist der Vorfilter in einem doppelten Gehäuse untergebracht, wobei das den Filter direkt umgebende Gehäuse das Innengehäuse darstellt, und dieses wiederum in einem Außengehäuse aufgenommen ist.

Zwischen Außen- und Innengehäuse ist vorzugsweise die Heizung sowie die Temperaturmessung angeordnet.

Dadurch ist es möglich, nach Öffnen des Außengehäuses den Filter zusammen mit seinem Innengehäuse zu entnehmen, und - lediglich nach Verschluß der Eingangs- und Ausgangsöffnungen dieses Innengehäuses - zusammen mit den Kartuschen ins Labor zur Auswertung zu transportieren.

Dies wird ergänzt durch Anordnung der Kartuschen auf möglichst kurzem Wege hinter der Entnahmestelle des Teilstromes, sowie durch Ermittlung einer Vielzahl weiterer Parameter des Teilstromes, was - ebenso wie die Kondensatabscheidung - weit entfernt von den Kartuschen und damit von der Entnahmestelle des Teilstromes an einem entsprechend geschützten Ort, vorzugsweise innerhalb eines diese Vorrichtungskomponenten aufnehmenden Meßschrankes, erfolgen kann.

Dabei wird vor allem durch Plausibilitätskontrollen überprüft, ob tatsächlich der vollständige entnommene Teilstrom untersucht wurde.

Zu diesem Zweck wird zunächst stromabwärts der Kartuschen das bereits mit dem Gasteilstrom mitgeförderte, angefallene Kondensat - welches nach Durchlaufen der Adsorberkartusche nicht mehr kontaminiert ist - abgeschieden.

Zusätzlich wird ebenfalls stromabwärts der Kartuschen der Teilstrom auf einen definierten Wert, beispielsweise 5°C, herabgekühlt. Die gewählte Temperatur muß so niedrig liegen, daß sichergestellt ist, daß ausgehend vom ursprünglichen Feuchtigkeitsgehalt und der ursprünglichen Temperatur des Teilstromes bei der erniedrigten Temperatur ein hinsichtlich des Wassergehaltes gesättigter Gasstrom erzielt wird, was sich in einer weiteren Kondensatabscheidung in dieser Kühlvorrichtung äußert.

Das so abgeschiedene Kondensat wird in einem Kondensatreservoir zwischengespeichert. Um die über eine z. B. 4-wöchige Probenahme sehr großen Kondensatmengen nicht auf Dauer lagern zu müssen, wird dieses Zwischenreservoir automatisch bei Erreichen eines Höchststandes, welcher mittels Sensor gemeldet wird, ganz oder teilweise geleert. Dies geschieht, indem mittels der zentralen Steuerung eine mit dem Reservoir verbundene Kondensatpumpe, deren Fördervolumen pro Zeiteinheit bzw. Hubvolumen definiert bekannt ist, in Gang gesetzt, und deren Laufzeit bzw. Umdrehungen bzw. Pumpenhübe durch die Steuerung registriert, womit die bei jedem Entleerungsvorgang aus dem Reservoir entnommene und in die Kanalisation abgeleitete Kondensatmenge bekannt ist und diese über die Langzeitprobennahme aufsummiert werden kann.

Der nach dieser Abkühlung vorliegende Teilstrom ist hinsichtlich seiner Temperatur und wegen des Sättigungszustandes auch hinsichtlich seines Wassergehaltes bekannt. Unter diesen normierten Bedingungen wird der Teilstrom einer Teilstrompumpe zugeführt, die das Ansaugen des Teilstromes von der Entnahmestelle aus dem Abgasstrom bis zur Teilstrompumpe und von dort aus weiter zur Abgabe in die Umgebung fördert.

Von dieser Teilstrompumpe ist wiederum das Fördervolumen pro Zeiteinheit bzw. pro Hub oder pro Umdrehung bekannt. Diese Teilstrompumpe wird mittels eines regelbaren Motors über die zentrale Steuerung so angetrieben, daß der von der Teilstrompumpe geförderte Teilstrom an der Entnahmestelle mit einer Strömungsgeschwindigkeit entnommen wird, welcher der Strömungsgeschwindigkeit des Original-Rauchgases an dieser Entnahmestelle entspricht, so daß dort also weder Saug- noch Stauwirkungen auftreten und somit eine hohe Wahrscheinlichkeit besteht, daß der entnommene Teilstrom hinsichtlich seiner Zusammensetzung der zu untersuchenden Dioxine und Furane dem Original-Abgasstrom entspricht.

Zu diesem Zweck ist möglichst nahe an der Entnahmestelle, also insbesondere an oder in der Sonde für die Entnahme des Teilstromes, ein Geschwindigkeitsmesser beispielsweise ein Prandtl-Rohr bezüglich des Abgasstromes angeordnet.

Bei der Steuerung der Teilstrompumpe muß ferner berücksichtigt werden, daß Druck, Temperatur und Feuchtigkeitsgehalt an der Entnahmestelle des Teilstromes nicht Druck, Temperatur und Feuchtigkeitsgehalt des Teilstromes stromabwärts der Kondensatabscheidung entsprechen. Aufgrund der abgeschiedenen Kondensatmenge, die pro Zeiteinheit ermittelt und aufsummiert wird, und der Temperatur am Ausgang des Kühlers zur Kondensatabscheidung ist eine Umrechnung durch die Zentralsteuerung automatisch möglich.

Zusätzlich dienen die so pro Zeiteinheit ermittelten Kondensatmengen zusammen mit den durch die Teilstrompumpe geförderten Teilstrommengen pro Zeiteinheit zur Plausibilitätsüberprüfung durch Gegenüberstellung mit dem Feuchtegehalt im Original-Abgasstrom.

Zur weiteren Plausibilitätskontrolle werden im Teilstrom zwischen der Kondensatabscheidung und der Teilstrompumpe mittels einer Gasuhr einerseits der Volumendurchfluß gemessen und andererseits mittels eines Massendurchflußmesser der Massendurchfluß pro Zeiteinheit, wobei insbesondere der Massendurchfluß pro Zeiteinheit verwendet wird, um durch Steuerung der Teilstrompumpe die richtige Strömungsgeschwindigkeit im Teilstrom an dessen Entnahmestelle zu bewirken und zur Plausibilitätsüberprüfung der Gasuhr.

Dadurch ist eine mannlose automatisierte, nachvollziehbare Langzeit-Probenahme möglich.

Alle stromabwärts der Kartuschen beschriebenen Verfahrensschritte bzw. Vorrichtungsteile können bis zu 50 m entfernt von den Kartuschen, die nahe an der Entnahmestelle des Teilstromes angeordnet werden müssen, untergebracht werden, also z. B. am Fuße des Abgas-Kamines in einer Leitstelle o. Ä.

Um die Wirksamkeit sowohl der Kartuschen als auch der stromabwärts der Kartuschen befindlichen Anlagenteile auf einen geringen Temperaturbereich beschränken zu können, was die Auswahl der Bauteile erleichtert und deren Kosten erniedrigt, wird der Teilstrom bereits stromaufwärts der Kartuschen, insbesondere direkt in dem Sondenrohr, an dessen vorderem Ende sich die Sonde zur Entnahme des Teilstromes befindet, gekühlt. Vorzugsweise ist dabei das Sondenrohr selbst als doppelwandiges Rohr ausgebildet, in dessen äußerem, hohlem Mantel eine Kühlflüssigkeit zirkuliert, die über einen externen Wärmetauscher geleitet wird. Dadurch wird das Gas des Teilstromes bei 60°C bis 65°C, also in einem engen Temperaturbereich von maximal 20°C Bandbreite, gehalten.

Da der so behandelte Teilstrom kontinuierlich in die Umgebung entlassen wird, und auch das dabei anfallende Kondensat diskontinuierlich, jedoch automatisch in die Kanalisation abgegeben wird, ist mittels der in der Probenahmenvorrichtung vorhandenen zentralen Steuerung eine mannlose Langzeit-Probeentnahme über 4-6 Wochen möglich.

Auch die nach einem solchen Probenahmenzyklus notwendige Auswechslung der beiden Kartuschen kann durch Labor-unerfahrenes Personal geschehen, indem ein Sensor, der das Fehlen der Kartuschen in dem Leitungsstrang registriert, automatisch - nach Einsetzen einer neuen Kartusche - eine Dichtigkeitsprüfung durch die Anlage veranlaßt, indem ein unmittelbar stromaufwärts der Kartuschen vorgeschaltetes Sperrventil geschlossen wird, und ebenso ein zweites Sperrventil stromabwärts des Kondensatreservoirs, und bei gesperrten Ventilen die Teilstrom-Pumpe einen Unterdruck im System erzeugt, dessen Aufrechterhaltung bzw. dessen Druckabfall über eine definierte Haltezeit gemessen wird.

### c) Ausführungsbeispiele

Eine Ausführungsform gemäß der Erfindung ist in den Figuren näher beschrieben. Es zeigen:
Fig. 1 eine schematische Darstellung der Vorrichtung ohne Vorfilter,
Fig. 2 eine schematische Darstellung analog der Fig.1 mit Vorfilter,
Fig. 3 den aufgeklappten Vorfilter im Längsschnitt und
Fig. 4 den Vorfilter in Stirnansicht.

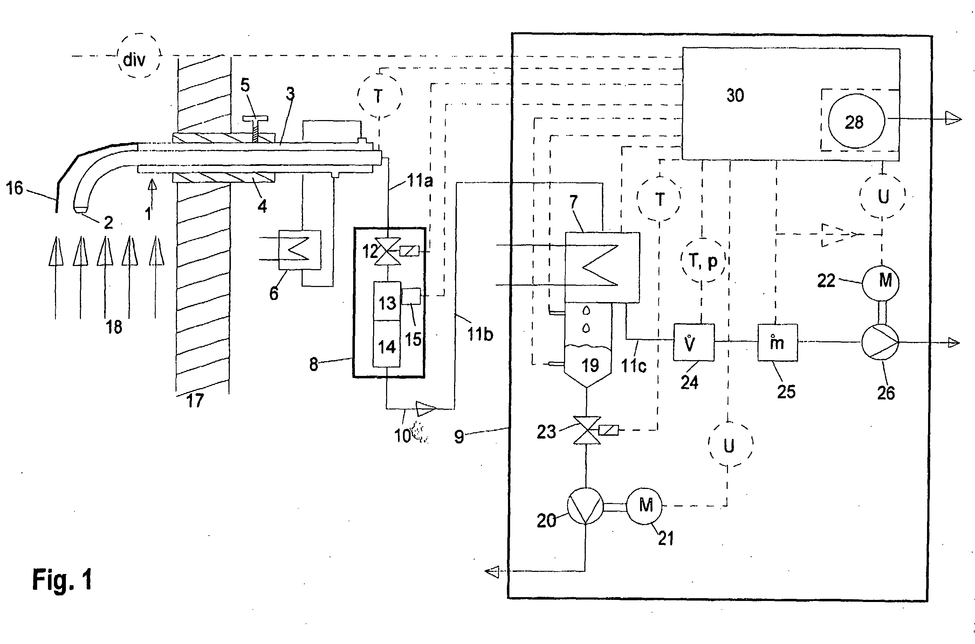

Im linken Teil der Fig. 1 ist das Sondenrohr 1 dargestellt, welches die Kaminwand 17 durchdringt, so daß die am vorderen Ende des Sondenrohres 1 befindliche Sonde 2 im Rauchgasstrom 18 angeordnet ist, und daraus einen Teilstrom entnimmt. Zu diesem Zweck steht die Sonde 2 über Rohrleitungen 11a, 11b, 11c mit einer Teilstrom-Pumpe 26 in Verbindung, von welcher aus der untersuchte Teilstrom in die Umgebung abgeführt wird.

Alle Teile der Vorrichtung stehen mit einer zentralen Steuerung 30 in Verbindung, die automatisch viele Funktionen, wie im folgenden näher dargelegt, steuert:

Das Sondenrohr 1 erstreckt sich quer durch die Wand 17 hindurch. Damit der Rauchgasstrom 18 auf eine in gleicher Richtung angeordnete Öffnung der Sonde 2 trifft, befindet sich diese am vorderen Ende einer 90°-Biegung des Sondenrohres 1. Neben der Sonde 2 endet ebenfalls ein Prandtlrohr 16, mit dem die Strömungsgeschwindigkeit der Rauchgase 18 im Kamin gemessen wird.

Das Sondenrohr 1 ist insbesondere in seinem geraden Verlauf mit einem Kühlmantel 3 umgeben, welcher an einen ersten Wärmetauscher 6 angeschlossen ist und zum Herabkühlen des entnommenen Teilstromes von Rauchgasen bereits auf dem Weg durch das Sondenrohr dient.

Um die Sonde 2 an der richtigen Stelle des Querschnittes im Kamin positionieren zu können, ist das gesamte Sondenrohr 1 einschließlich des Kühlmantels 3 in einer Verschiebebuchse 4, die sich ebenfalls quer durch die Wand 17 des Kamins hindurch erstreckt, in Längsrichtung der Verschiebebuchse 4 verschiebbar und an der gewünschten Position mittels einer Klemmschraube 5 justierbar .

In Durchflußrichtung 10 der Rauchgase des Teilstromes befindet sich stromabwärts des Sondenrohres 1 und über eine erste Rohrleitung 11a verbunden der Kartuschenkasten 8 so nahe wie möglich am Sondenrohr. In der Regel ist der Kartuschenkasten 8 direkt an der Außenseite der Kaminwand 17 befestigt. Je kürzer die Länge der Rohrleitung 11a ist, um so geringer ist die Wahrscheinlichkeit, daß darin Veränderungen der zu untersuchenden Stoffe auftreten können.

Aus dem gleichen Grunde ist auch keine Heizvorrichtung zwischen der Sonde 2 und dem Kartuschenkasten 8, insbesondere dem Ende des Kartuschenkastens 8, angeordnet.

Im Kartuschenkasten 8 ist in Durchlaufrichtung 10 zunächst ein erstes Sperrventil 12 angeordnet, welches beispielsweise von einem ansteuerbaren Magnetschalter aus über die Steuerung 30 gesperrt werden kann. Im weiteren Verlauf befinden sich in Reihe geschaltet die Staubfilterkartusche 13 sowie die Adsorberkartusche 14 im kartuschenkasten 8, um von dem Teilstrom durchströmt zu werden.

Von dort aus gelangt der Teilstrom über die zweite Rohrleitung 11b zu einem Meßschrank 9, der von der Kaminwand 17 und damit der Sonde und dem Kartuschenkasten 8 relativ weit, etwa 50 m, entfernt sein kann und in der Regel in der Leitwarte der zu untersuchenden Anlage angeordnet ist.

Im Meßschrank 9 wird der Teilstrom zunächst in einen zweiten Wärmetauscher 7 zwecks weiterer Kühlung geführt, und dabei eine Aufteilung in Kondensat einerseits und einen gekühlten, mit Feuchtigkeit gesättigten Gas-Teilstrom andererseits erreicht. Das Kondensat sammelt sich dabei zunächst in einem Kondensatreservoir 19, und zwar sowohl das in diesem zweiten Wärmetauscher 7 erst erzeugte Kondensat als auch das bereits auf der Strecke zwischen der Sonde 2 bis zu diesem zweiten Wärmetauscher 7 angefallene Kondensat .

Das Kondensatreservoir 19 verfügt über Füllstandsensoren für einen minimalen oder einen maximalen Füllungsstand.

Der Ausfluß des Kondensatreservoirs 19 führt über ein zweites Sperrventil 23 und eine Kondensatpumpe 20, die von einem steuerbaren ersten Motor 21 angetrieben wird, in die Kanalisation.

Das Entleeren des Kondensatreservoirs 19 erfolgt immer dann, wenn der Maximal-Füllstands-Sensor im Reservoir 19 anschlägt, indem der Motor 21 die Pumpe 20 bei geöffnetem Sperrventil 23 solange antreibt, bis der Minimal-Füllstandsensor anschlägt. Dabei werden die Umdrehungen bzw. Hübe der Kondensat-Pumpe 20 registriert, und diese Hübe über einen beliebigen Zeitraum, in der Regel den gesamten Meßzyklus, aufsummiert.

Der den zweiten Wärmetauscher 7 verlassende, gesättigte und gekühlte Gas-Teilstrom wird über eine dritte Rohrleitung 11c über einen Volumendurchflußmesser, in der Regel eine Gasuhr 24 und einem Massendurchflußmesser 25, der Teilstrompumpe 26 zugeführt. Auch bei dieser Teilstrompumpe 26 ist das Volumen pro Hub bzw. Umdrehung bekannt und diese Hübe bzw. Umdrehungen werden ebenfalls registriert.

Die momentan ermittelten Werte für Massendurchfluß bzw. Volumendurchfluß, sowie die dabei festgehaltenen Temperaturen und Druckwerte des Teilstromes gehen an die Steuerung 30, und diese steuert ebenfalls den Motor 22, welcher die Teilstrom-Pumpe 26 antreibt.

Dabei wird die Teilstrom-Pumpe 26, die kontinuierlich läuft, so gesteuert, daß hierdurch an der Sonde 2 eine Fließgeschwindigkeit in das Sondenrohr 1 hinein erreicht wird, die der Fließgeschwindigkeit im übrigen Rauchgaskamin, festgestellt durch das Prandtl-Rohr 16, entspricht.

Diese Fließgeschwindigkeit entspricht jedoch nicht der Fließgeschwindigkeit in der Rohrleitung 11c, da dort durch das Abkühlen und Sättigen mit Feuchtigkeit sowie die vorherige Kondensatabscheidung andere Bedingungen hinsichtlich Druck und Temperatur vorliegen.

Die entsprechende Umrechnung von den an der Sonde 2 vorliegenden Bedingungen hinsichtlich Temperatur, Druck und Feuchtigkeit auf die an den Meßstellen in der Leitung 11c vorliegenden Bedingungen erfolgt durch die Steuerung 30 unter Verwendung diverser Meßparameter auch aus dem Rauchgasstrom, beispielsweise Temperatur, Druck und Feuchtigkeit, weiterhin auch Sauerstoffgehalt und gegebenenfalls Kohlendioxidgehalt.

Über die Steuerung 30 erfolgt ferner die Kontrolle der Einhaltung der SollTemperatur des Teilstromes am Sondenrohr 1, nämlich insbesondere am Ausgang des Sondenrohres, sowie die Kontrolle der Temperatur am Ausgang des zweiten Wärmetauschers 7 zur Kondensatabscheidung.

Weiterhin erfolgen Plausibilitätskontrollen, die die Funktionssicherheit der Anlage erhöhen sollen.

So wird anhand der Original-Parameter, wie sie im Rauchgaskamin hinsichtlich Druck, Temperatur und Feuchtigkeitsgehalt sowie Strömungsgeschwindigkeit gemessen wurden, errechnet, welcher Gesamtdurchsatz, aufsummiert über einen Zeitraum, beispielsweise den gesamten Meßzyklus, einerseits an Kondensat und andererseits an gesättigtem, gekühlten Gas-Teilstrom erzielt werden muß, der in die Umgebung abgeleitet wird. Dies wird mit den hierfür erzielten tatsächlichen Werten, nämlich ausgefördertem Kondensat ermittelt durch Anzahl der Pumpenumdrehungen der Kondensatpumpe 20 sowie hinsichtlich des an die Umgebung ausgeförderten Gas-Teilstromes einerseits mit dem aufsummierten Volumenstrom und andererseits mit dem aufsummierten Massenstrom, verglichen.

Eine weitere Kontrolle kann der Vergleich mit der durch die Teilstrompumpe 26 insgesamt geförderten Teilstrommenge sein, wiederum gemessen anhand der festgestellten Umdrehungsanzahl/Hubanzahl dieser Teilstrompumpe 26.

Alle über einen Meßzyklus erhobenen Daten werden von der Steuerung 30 auf einen elektronischen Datenträger 28 gespeichert, der der Steuerung 30 entnommen und zusammen mit den Kartuschen 13, 14 dem anschließend die Langzeitprobe auswertendem Labor übergeben werden kann.

Ein zweiter zusätzlicher innerer elektronischer Datenträger dient als Sicherheitsdatenspeicher.

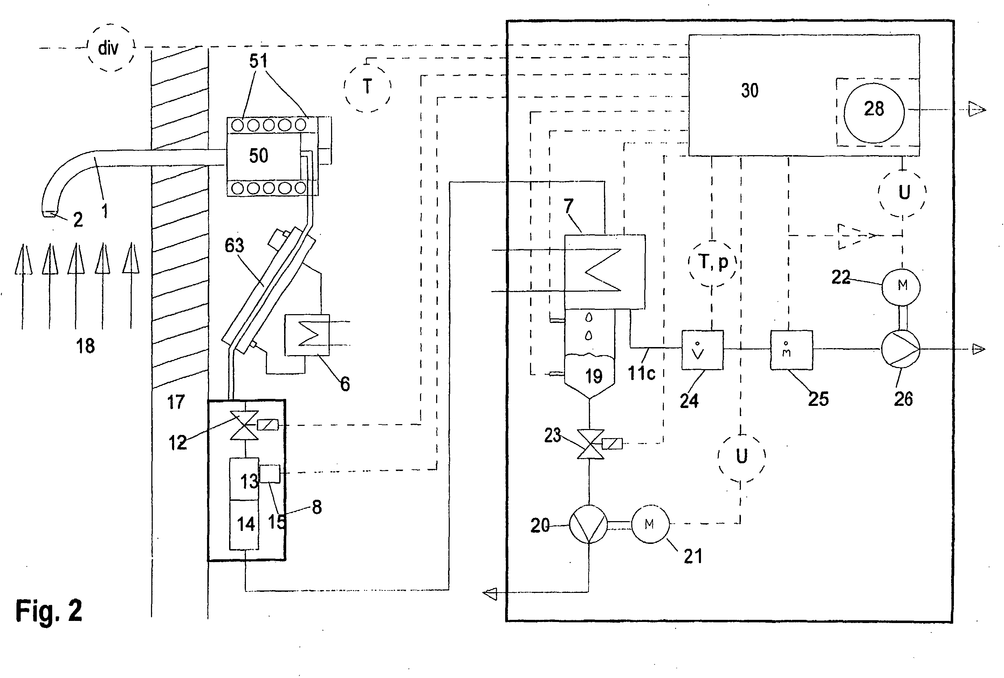

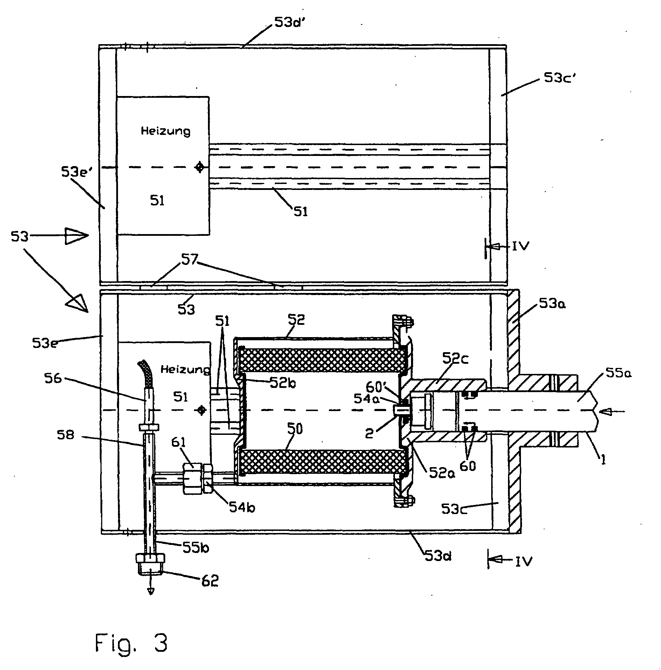

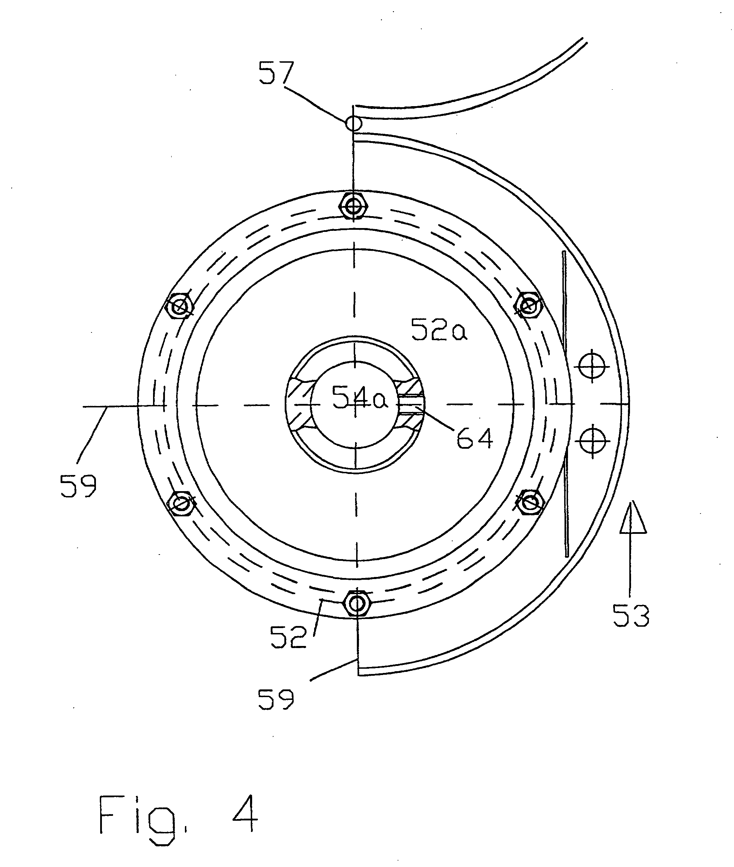

Fig. 2 unterscheidet sich von Fig. 1 dadurch, daß auf dem hinteren Ende des Sondenrohres 1, welches die Wand durchdringt, unmittelbar der Staub-Vorfilter 50 mit seinen zwei Gehäusen angeordnet ist, wie er in den Fig. 3 und 4 im Detail dargestellt ist.

Der Gas-Teilstrom verläßt den Vorfilter an dessen hinterem vorzugsweise unterem Ende und ist von dort über eine Kühlstrecke 63, die mittels eines ersten Wärmetauschers 6 gekühlt wird, im Wesentlichen nach unten, vorzugsweise schräg nach unten in Richtung Außenseite der Wand, geführt.

Vom Ausgang der Kühlstrecke 63 wird der Gas-Teilstrom wiederum in den Kartuschenkasten 8 eingeleitet, der vorzugsweise wieder an der Außenseite der Wand befestigt ist.

Die Abstände zwischen Vorfilter 50 und Kühlstrecke 63 sowie Kühlstrecke 63 und Kartuschenkasten 8 sind dabei so gering wie möglich gehalten.

In allen anderen Punkten stimmt diese Lösung mit derjenigen der Fig. 1 überein.

Die Fig. 3 und 4 zeigen den Vorfilter 50 im Detail, wobei es insbesondere auf das einfache Auswechseln des Filters ohne Kontaminationsgefahr für die Umgebung ankommt:

Der Vorfilter 50 selbst besteht üblicherweise aus Papier oder einem papier-ähnlichen Material in Form eines Torus, vorzugsweise mit rechteckigem Querschnitt, der stimseitig dicht in einem Gehäuse aufgenommen ist, und radial, z.B. von Innen nach Außen, vom Gas-Teilstrom durchdrungen werden soll.

Zu diesem Zweck ist der Vorfilter 50 in einem zylindrischen Innengehäuse, bestehend aus zwei stimseitigen Flanschen 52a, 52b und einem radial umgebenden zylindrischen Gehäuseteil dicht umgeben.

Der einlass-seitige Flansch 52a weist einen nach Außen, also vom Vorfilter 50 weg, ragenden zentralen Rohrstutzen 52c auf, dessen Innendurchmesser genau auf den Außendurchmesser des Endes des Sondenrohres 1 aufschiebbar ist. Zur Abdichtung befinden sich zwei ringförmig umlaufende, axial versetzte, Dichtringe 60 in entsprechenden Nuten auf dem Außenumfang des Sondenrohres 1. Mittels quer durch den Rohrstutzen 52c hindurch verlaufender Gewindebohrungen 64 ist dabei eine Fixierung auf dem Sondenrohr 1 möglich.

Das im Sondenrohr 1 befindliche Innenrohr, die eigentliche Sonde 2, durchdringt den Flansch 52a durch eine dort vorgesehene, passende zentrale Eingangsöffnung 54a, die wiederum durch einen umlaufenden Dichtring 60° abgedichtet ist, so daß der Gas-Teilstrom in den Innenraum innerhalb des Vorfilters 50 strömen kann.

Die Ausgangsöffnung 54b befindet sich im gegenüberliegenden Flansch 52b radial außerhalb der Außenseite des Vorfilters 50 und ist mit einem Rohrstutzen fest verbunden, der über eine Schraubverbindung 61 mit einer den Gasstrom weiterführenden Rohrleitung 58 verbindbar ist.

Das Innengehäuse 52 ist konzentrisch von einem Außengehäuse 53 umgeben, welches in Form von zwei entlang einer Mantellinie gegeneinander aufklappbaren Halbschalen besteht, so daß im aufgeklappten Zustand der Vorfilter 50 samt Innengehäuse 52 entnommen werden kann.

Ein erster stirnseitiger Flansch 53a mit zentralem Rohrstutzen ist dabei wiederum zwecks Befestigung auf dem Sondenrohr 1 auf dieses aufgeschoben, und zwar vom Ende zurückversetzt, also etwas stromaufwärts des Flansches 52a des Innengehäuses 52. Auch der Flansch 53a ist mittels Querbohrungen und Klemmschraube auf dem Sondenrohr fixierbar.

An dem das Sondenrohr 1 ringförmig umgebenden Flansch 53a ist die eine Halbschale 53d zusammen mit ihren halbkreisförmigen Stirnflanschen 53c und 53e fest angeordnet. Die andere Halbschale, bestehend aus dem Halbzylinder 53d' und den halbkreisförmigen Stirnflanschen 53e', 53c' sind über entlang einer Mantellinie angeordnete Scharniere 57 demgegenüber klappbar angeordnet.

Fig. 3 zeigt in einem Längsschnitt dieses Außengehäuse 53 im aufgeklappten Zustand, mit Blick auf die Berührungsebene 59 der beiden Halbschalen.

Der Gas-Teilstrom verläßt das Außengehäuse 53 über eine Rohrleitung 58 in Form eines T-Stückes, dessen eines Ende über eine Schraubverbindung 61 mit dem Ausgangsstutzen des Innengehäuses 52 verschraubbar ist.

Das zweite Ende liegt bereits außerhalb des Außengehäuses 53, wobei die Rohrleitung 58 das Außengehäuse 53, insbesondere dessen zylindrischen Mantelteil, auf der Berührungsebene 59 durch eine entsprechende Ausgangsöffnung 55b verläßt.

Das dritte Ende der T-förmigen Rohrleitung 58 liegt innerhalb des Außengehäuses 53 und dient dem Einschrauben eines Temperatursensors 56, der ständig oder in bestimmten zeitlichen Abständen die Temperatur des den Vorfilter 50 verlassenden Gas-Teilstromes mißt.

Ist diese zu niedrig, erfolgt eine Beheizung des Filters mittels einer elektrischen Heizung 51, die in den Halbschalen des Außengehäuses 53 untergebracht ist und somit den Vorfilter 50 samt dessen Innengehäuse 52 aufheizt.

Zum Auswechseln des Vorfilters 50 wird die nicht dargestellte Fixierung der beiden Halbschalen des Außengehäuses 53, die im geschlossenen Zustand vorhanden ist, gelöst, die bewegliche Halbschale aufgeklappt und zumindest die Schraubverbindung 61 zwischen der Rohrleitung 58 und dem Innengehäuse 52 gelöst. Je nach dem, ob die von der Rohrleitung 58 weiterführende Rohrleitung fest oder flexibel ausgebildet ist, muß auch die Verschraubung 62 zur weiterführenden Rohrleitung hin geöffnet werden. Dann kann das gesamte Rohrstück 58 aus seiner Position entfernt und zur Seite gelegt werden.

Nach Lösen der Klemmschraube in der Gewindebohrung 64 des Rohrstutzens 52c des Innengehäuses 52 kann dann das gesamte Innengehäuse 52 axial vom Ende des Innenrohres 1 abgezogen werden, da nunmehr auf der abgewandten Seite in axialer Richtung wegen Entfernen der Rohrleitung 58 hierfür ausreichend axialer Freiraum innerhalb des Außengehäuses 53 zur Verfügung steht.

Nach Verschließen der Eingangsöffnung 54a und Ausgangsöffnung 54b des Innengehäuses 52 wird dieses zusammen mit dem beinhaltetem Vorfilter 50 mit den Kartuschen 13, 14 ins Labor zur Auswertung verbracht. Das Einsetzen eines neuen Vorfilters samt Innengehäuse erfolgt in umgekehrter Reihenfolge.

### BEZUGSZEICHENLISTE

- 1: Sondenrohr
- 2: Sonde
- 3: Kühlmantel
- 4: Verschiebebuchse
- 5: Klemmschraube
- 6: erster Wärmetauscher
- 7: zweiter Wärmetauscher
- 8: Kartuschenkasten
- 9: Meßschrank
- 10: Durchflußrichtung
- 11a, 11b, 11c: Rohrleitungen
- 12: Sperrventil
- 13: Staubfilterkartusche
- 14: Adsorberkartusche
- 15: Kartuschensensor
- 16: Prandtl-Rohr
- 17: Kaminwand
- 18: Rauchgasstrom
- 19: Kondensatreservoir
- 20: Kondensatpumpe
- 21: erster Motor
- 22: zweiter Motor
- 23: Sperrventil
- 24: Gasuhr
- 25: Massendurchflußmesser
- 26: Teilstrompumpe
- 28: elektrischer Datenträger
- 30: Zeitsteuerung
- 50: Vorfilter
- 51: Heizung
- 52: Innengehäuse
- 52a,b: Flansch
- 52c: Rohrstutzen
- 53: Außengehäuse
- 53a: Flansch
- 54a,b: Ein-/ Ausgangsöffnung
- 55a,b: Ein-/ Ausgangsöffnung
- 56: T-Sensor
- 57: Scharniere
- 58: Rohrleitung
- 59: Berührungsebene
- 60: Dichtring
- 61: Schraubverbindung
- 62: Schraubverbindung
- 63: Kühlstrecke
- 64: Gewindebohrung

## Patentansprüche

1. Verfahren zur Probenahme aus Abgasen, die mittel- und schwerflüchtige Substanzen, insbesondere polychlorierte Dibenzo(p)dioxine (PCDD) und polychlorierte Dibenzo(p)furane (PCDF), in einer Gas-, Feststoff- oder Aerosolphase enthalten, wobei ein Gas-Teilstrom mittels einer Pumpe (26) aus dem Abgas abgeleitet und nacheinander einerseits über eine Staubfilterkartusche (13) und andererseits über eine Adsorberkartusche (14) geleitet wird, wobei der Teilstrom keine Aufheizung erfährt, insbesondere nicht vor Durchlauf durch die Kartuschen (13, 14), und im Teilstrom enthaltenes Kondensat nach dem Durchlaufen der Kartuschen (13,14) aus dem Teilstrom abgeschieden wird
**dadurch gekennzeichnet, daß**
das angefallene Kondensat hinsichtlich der Menge, insbesondere der angefallenen Menge pro Zeiteinheit, bestimmt und danach in die Kanalisation abgeführt wird, wobei
- nach den Kartuschen (13, 14) der Teilstrom gekühlt wird und dabei einerseits ein feuchtigkeitsgesättigter Gas-Teilstrom und andererseits Kondensat erzeugt wird,
- der feuchtigkeitsgesättigte, gekühlte Teilstrom hinsichtlich seines Volumens pro Zeiteinheit z. B. mittels einer Gasuhr (24) gemessen wird,
- der feuchtigkeitsgesättigte, gekühlte Gas-Teilstrom hinsichtlich seines Massendurchsatzes pro Zeiteinheit bestimmt wird, und
- der Feuchtigkeitsgehalt der Abgase ermittelt wird und zur Kontrolle der ermittelten Meßwerte als Plausibilitätsprüfung die pro Zeiteinheit angefallene Kondensatmenge in Relation zum ermittelten Massendurchsatz und/oder Volumendurchsatz derselben Zeiteinheit und der darin enthaltenen Feuchtigkeit unter Berücksichtigung des in die Umgebung entlassenen Gas-Teilstromes und der darin enthaltenen Restfeuchte gesetzt wird.

2. Verfahren zur Probenahme aus Abgasen, die mittel- und schwerflüchtige Substanzen, insbesondere polychlorierte Dibenzo(p)dioxine (PCDD) und polychlorierte Dibenzo(p)furane (PCDF), in einer Gas-, Feststoff- oder Aerosolphase enthalten, wobei ein Gas-Teilstrom mittels einer Pumpe (26) aus dem Abgas abgeleitet und nacheinander einerseits über eine Staubfilterkartusche (13) und andererseits über eine Adsorberkartusche (14) geleitet wird, wobei der Teilstrom vor Aufleiten auf die Kartuschen (13, 14) über einen Staub-Vorfilter (50) geleitet wird, und im Teilstrom enthaltenes Kondensat nach dem Durchlaufen der Kartuschen (13,14) aus dem Teilstrom abgeschieden wird,
**dadurch gekennzeichnet, daß**
das angefallene Kondensat hinsichtlich der Menge, insbesondere der angefallenen Menge pro Zeiteinheit, bestimmt und danach in die Kanalisation abgeführt wird, wobei
- nach den Kartuschen (13, 14) der Teilstrom gekühlt wird, insbesondere auf Raumtemperatur oder darunter, und dabei einerseits ein feuchtigkeitsgesättigter Gas-Teilstrom und andererseits Kondensat erzeugt wird,
- der feuchtigkeitsgesättigte, gekühlte Teilstrom hinsichtlich seines Volumens pro Zeiteinheit z. B. mittels einer Gasuhr (24) gemessen wird,
- der feuchtigkeitsgesättigte, gekühlte Gas-Teilstrom hinsichtlich seines Massendurchsatzes pro Zeiteinheit bestimmt wird, und
- der Feuchtigkeitsgehalt der Abgase ermittelt wird und zur Kontrolle der ermittelten Meßwerte als Plausibilitätsprüfung die pro Zeiteinheit angefallene Kondensatmenge in Relation zum ermittelten Massendurchsatz und/oder Volumendurchsatz derselben Zeiteinheit und der darin enthaltenen Feuchtigkeit unter Berücksichtigung des in die Umgebung entlassenen Gas-Teilstromes und der darin enthaltenen Restfeuchte gesetzt wird.

3. Verfahren nach Anspruch 2,
**dadurch gekennzeichnet, daß**
- der Vorfilter (50) von dem Gas-Teilstrom im kondensatfreien Zustand durchströmt und insbesondere der Vorfilter (50) beheizt wird, und insbesondere
- die Aufheizung des Gas-Teilstromes im Vorfilter (50) auf eine Temperatur oberhalb des Taupunktes, insbesondere auf 100°C - 120°C, jedoch nicht über 130°C erfolgt.

4. Verfahren nach Anspruch 2 oder 3,
**dadurch gekennzeichnet, daß**
zwischen dem Vorfilter (50) und den Kartuschen (13, 14) eine Abkühlung des Teilstromes auf ≤ 60°C, insbesondere auf eine Temperatur, die nicht höher als die Temperatur des Abgases ist, erfolgt.

5. Verfahren nach Anspruch 2 bis 4,
**dadurch gekennzeichnet, daß**
- der Vorfilter (50), der von einem Innengehäuse (52) und dieses von einem Außengehäuse (53) umgeben ist, für die Auswertung zusammen mit dem Innengehäuse (52) dem Außengehäuse (53) entnommen wird und nach Verschließen der Eingangs- und Ausgangsöffnungen (54a, 54b) zum Ort der Auswertung, verbracht wird, und insbesondere
- innerhalb des Außengehäuses (53), stromabwärts des Vorfilters (50), insbesondere außerhalb des Innengehäuses (52), eine Temperaturüberwachung des Gas-Teilstromes erfolgt.

6. Verfahren nach Anspruch 1,
**dadurch gekennzeichnet, daß**
- in Durchlaufrichtung des Teilstromes vor den Kartuschen (13, 14) anfallendes Kondensat mit dem Teilstrom durch die Kartuschen (13, 14) geführt wird, und insbesondere
- eine Abkühlung des Teilstromes erfolgt, insbesondere vor Durchlauf durch die Kartuschen (13, 14), insbesondere auf kleiner oder gleich 60°C.

7. Verfahren nach einem der vorhergehenden Ansprüche,
**dadurch gekennzeichnet, daß**
bei Ermittlung des Durchfluß-Volumens und/oder der Durchfluß-Masse des gekühlten Teilstromes die Temperatur und der Druck dieses Teilstromes ermittelt wird.

8. Verfahren nach einem der vorhergehenden Ansprüche,
**dadurch gekennzeichnet, daß**
an der Absaugstelle des Gas-Teilstromes aus dem Abgas die Strömungsgeschwindigkeit des Abgases ermittelt wird und die den abgeleiteten Gas-Teilstrom absaugende Pumpe (26) unter Verwendung des ermittelten Massendurchsatzes und/oder Volumendurchsatzes und der dabei gemessenen Temperatur und des dabei gemessenen Druckes so gesteuert wird, daß die Geschwindigkeit des abgeleiteten Gas-Teilstromes an der Entnahmestelle der Strömungsgeschwindigkeit des Rauchgases (18) entspricht.

9. Verfahren nach einem der vorhergehenden Ansprüche,
**dadurch gekennzeichnet, daß**
das anfallende Kondensat zwischengespeichert und hinsichtlich seiner Menge durch Abpumpen jeweils definierter Teilmengen, insbesondere in Form von Pumpenhüben, ermittelt wird.

10. Verfahren nach einem der vorhergehenden Ansprüche,
**dadurch gekennzeichnet, daß**
nach Einsetzen einer neuen Kartusche (13, 14) durch Aufbauen eines Unterdrukkes mittels der den Gas-Teilstrom fördernden Pumpe (26) und Abschluß des Systems stromaufwärts der Kartuschen (13, 14) und stromabwärts eines Kondensat-Reservoirs (19), die Dichtigkeit des Systems vor jedem neuen Probenahmenzyklus geprüft wird.

11. Vorrichtung zur Durchführung von Probenahmen aus Abgasen, die mittelund schwerflüchtige Substanzen, insbesondere polychlorierte Dibenzo(p)dioxine (PCDD) und polychlorierte Dibenzo(p)furane (PCDF), in einer Gas-, Feststoffoder Aerosolphase enthalten, bei welcher ein Gas-Teilstrom mittels einer sich am vorderen Ende eines Sondenrohrs (1) befindlichen Sonde (2) aus dem Abgas abgeleitet und über eine Rohrleitung (11a,11b,11c) einer Staubfilterkartusche (13) und einer Adsorberkartusche (14), sowie von dort einer Teilstrompumpe (26) zugeführt wird, wobei die Rohrleitung (11a) zwischen der Sonde (2) und den Kartuschen (13, 14) so kurz wie möglich gehalten wird,
**dadurch gekennzeichnet, daß**
ein in der Rohrleitung (11b) stromabwärts der Kartuschen (13,14) angeordneter Wärmetauscher (7) mit einem Kondensatreservoir (19) in Verbindung steht, welches wenigstens einen Maximal-Füllstandbegrenzer umfaßt und mittels einer Kondensat-Pumpe (20) mit definiertem Pumpenvolumen über ein Sperrventil (23) in die Kanalisation entleerbar ist, wobei diese Kondensatpumpe (20) mit einer zentralen Steuerung (30) in Verbindung steht, und
- in der Rohrleitung (11c) stromabwärts des Wärmetauschers (7), insbesondere stromaufwärts der Teilstrompumpe (26), ein Volumendurchflußmesser, insbesondere eine Gasuhr (24), und/oder ein Massendurchflußmesser (25) angeordnet ist,
- an der Position des Volumendurchflußmessers und/oder des Massendurchflußmessers (25) ein Temperatursensor sowie ein Drucksensor für den Teilstrom vorhanden ist, und
- die Teilstrompumpe (26) eine Pumpe mit definiertem Hub- bzw. Fördervolumen ist und Mittel zur Aufsummierung der pro Zeiteinheit durch die Teilstrompumpe (26) geförderten TeilStrom-Menge vorhanden sind und die zentrale Steuerung (30) dafür ausgelegt ist, die aufsummierte Teilstrom-Menge mit den aufsummierten Werten des Volumendurchflußmessers und/oder des Massendurchflußmessers (25) sowie mit den angefallenen Kondensatmengen zu vergleichen.

12. Vorrichtung zur Durchführung von Probenahmen aus Abgasen, die mittelund schwerflüchtige Substanzen, insbesondere polychlorierte Dibenzo(p)dioxine (PCDD) und polychlorierte Dibenzo(p)furane (PCDF), in einer Gas-, Feststoff- oder Aerosolphase enthalten, bei weicher ein Gas-Teilstrom mittels einer sich am vorderen Ende eines Sondenrohrs (1) befindlichen Sonde (2) aus dem Abgas abgeleitet und über eine Rohrleitung (11a,11b,11c) einer Staubfilterkartusche (13) und einer Adsorberkartusche (14), sowie von dort einer Teilstrompumpe (26) zugeführt wird, wobei zwischen der Sonde (2) und den Kartuschen (13, 14) ein Staub-Vorfilter (50) angeordnet ist, und der Vorfilter (50) insbesondere eine Heizung (51) umfaßt,
**dadurch gekennzeichnet, daß**
ein in der Rohrleitung (11b) stromabwärts der Kartuschen (13,14) angeordneter Wärmetauscher (7) mit einem Kondensatreservoir (19) in Verbindung steht, welches wenigstens einen Maximal-Füllstandbegrenzer umfaßt und mittels einer Kondensat-Pumpe (20) mit definiertem Pumpenvolumen über ein Sperrventil (23) in die Kanalisation entleerbar ist, wobei diese Kondensatpumpe (20) mit einer zentralen Steuerung (30) in Verbindung steht, und
- in der Rohrleitung (11c) stromabwärts des Wärmetauschers (7), insbesondere stromaufwärts der Teilstrompumpe (26), ein Volumendurchflußmesser, insbesondere eine Gasuhr (24), und/oder ein Massendurchflußmesser (25) angeordnet ist,
- an der Position des Volumendurchflußmessers und/oder des Massendurchflußmessers (25) ein Temperatursensor sowie ein Drucksensor für den Teilstrom vorhanden ist, und
- die Teilstrompumpe (26) eine Pumpe mit definiertem Hub- bzw. Fördervolumen ist und Mittel zur Aufsummierung der pro Zeiteinheit durch die Teilstrompumpe (26) geförderten Teilstrom-Menge vorhanden sind und die zentrale Steuerung (30) dafür ausgelegt ist, die aufsummierte Teilstrom-Menge mit den aufsummierten Werten des Volumendurchflußmessers und/oder des Massendurchflußmessers (25) sowie mit den angefallenen Kondensatmengen zu vergleichen.

13. Vorrichtung nach Anspruch 12,
**dadurch gekennzeichnet, daß**
- der Vorfilter (50) in Durchlaufrichtung des Gas-Teilstromes unmittelbar hinter der Sonde (2), insbesondere direkt auf dem hinteren Ende des Sondenrohres (1), angeordnet ist, und insbesondere
- der Vorfilter (50), der insbesondere die handelsübliche Form eines Torus mit rechteckiger Querschnittsfläche aufweist, in einem Innengehäuse (52), welches Ein- und Ausgangsöffnungen (54a, 54b) besitzt, aufgenommen ist, wobei das Innengehäuse (52) von einem Außengehäuse (53) mit Ein- und Ausgangsöffnungen (55a, 55b) umgeben ist.

14. Vorrichtung nach Vorrichtungsanspruch 13,
**dadurch gekennzeichnet, daß**
- im Außengehäuse (53), außerhalb des Innengehäuses (52), eine Heizung (51), insbesondere eine elektrische Heizung (51) und/oder ein Temperatursensor (56), insbesondere im Laufweg des Gas-Teilstromes, insbesondere stromabwärts des Vorfilters (50), angeordnet ist, und insbesondere
- das Außengehäuse (53) einen stimseitigen Flansch (53a) auf der Eingangsseite umfaßt, der im Zentrum die Eingangsöffnung (55a) in Form eines Eingangsstutzens aufweist, welcher auf den Außendurchmesser des Sondenrohres (1) dicht aufsteckbar und befestigbar ist.

15. Vorrichtung nach einem der Vorrichtungsansprüche 13 oder 14,
**dadurch gekennzeichnet, daß**
- das Außengehäuse (53) aus zwei Halbschalen (53d, 53d') besteht, die über Scharniere (57) um eine Mantellinie relativ zueinander klappbar sind, wobei die eine Halbschale (53d) fest mit dem Flansch (53a) verbunden ist, und insbesondere
- eine vom Innengehäuse (52) durch das Außengehäuse (53) nach außen führende Rohrleitung (58) für den Gas-Teilstrom auf der Berührungsebene (59) der beiden Halbschalen (53d, 53d') des Außengehäuses (53) nach außen geführt ist, so daß nach Öffnen des Außengehäuses und Lösen einer Schraubverbindung (61) zwischen Rohrleitung (58) und Innengehäuse (52) die Rohrleitung (58) aus dem Außengehäuse (53) entfernbar ist.

16. Vorrichtung nach Vorrichtungsanspruch 15,
**dadurch gekennzeichnet, daß**
in die Rohrleitung (58) der Temperatursensor (56) einschraubbar ist und die Rohrleitung (58) insbesondere in Form eines T-Stückes vorliegt, von dem das eine Ende die Verschraubung (61) gegenüber dem Innengehäuse (52), das zweite Ende den eingeschraubten Sensor (56) und das dritte Ende eine Schraubverbindung (62) zur weiterführenden Rohrleitung hin umfaßt.

17. Vorrichtung nach einem der Vorrichtungsansprüche 15 oder 16,
**dadurch gekennzeichnet, daß**
- das Innengehäuse (52), insbesondere mit seinem stimseitigen Flansch (52a), auf dem freien Ende des Sondenrohres (1) dicht aufsteckbar ist und auf der gegenüberliegenden Seite der axiale Freiraum zwischen Innengehäuse (52) und Außengehäuse (53) nach Entfernen der Rohrleitung (58) ausreicht, um das komplette Innengehäuse (52) vom Sondenrohr (1) axial abzuziehen, und insbesondere
- das Sondenrohr geeignet ist, sich durch eine Wand (17) eines Rauchgas-Kamines hindurch zuerstrecken und das Sondenrohr (1) als doppelwandiges Rohr ausgebildet ist, dessen Hohlraum zwischen innerem und äußerem Mantel mit einem ersten Wärmetauscher (6) in Verbindung steht.

18. Vorrichtung nach einem der Vorrichtungsansprüche 13 oder 17,
**dadurch gekennzeichnet, daß**
- die Staubfilterkartusche (13) und die Adsorberkartusche (14) hintereinander angeordnet sind und gemeinsam in einem Kartuschenkasten (8) untergebracht sind, in dem stromaufwärts der Kartuschen zusätzlich ein ansteuerbares Sperrventil (12) angeordnet ist, und insbesondere
- der Kartuschenkasten (8) möglichst nahe, insbesondere unmittelbar am, auslaufseitigen Ende des Sondenrohres (1) angeordnet ist, und insbesondere
- die zentrale Steuerung (30) dafür ausgelegt ist alle während der Probenahme ermittelten Meßwerte auf einen Datenträger, insbesondere einen elektronischen Datenträger (28), zu überspielen, der zusammen mit den Kartuschen (13,14) am Ende der Probenahme dem die Kartuschen auswertenden Labor übergeben werden kann.

19. Vorrichtung nach einem der Vorrichtungsansprüche 13 oder 17 bis 18,
**dadurch gekennzeichnet, daß**
- die zentrale Steuerung in einem gegenüber dem Kartuschenkasten (8) beabstandeten Meßschrank (9) angeordnet ist, und insbesondere
- die zentrale Steuerung (30) über einen regelbaren Motor (22) die Teilstrompumpe (26) antreibt.

20. Vorrichtung nach einem der vorhergehenden Vorrichtungsansprüche,
**dadurch gekennzeichnet, daß**
an dem Sondenrohr (1) am vorderen Ende, insbesondere möglichst nahe an der Sonde (2), ein Prandtlrohr (16) zur Bestimmung der Strömungsgeschwindigkeit der Abgase angeordnet ist.

21. Vorrichtung nach einem der vorhergehenden Vorrichtungsansprüche,
**dadurch gekennzeichnet, daß**
das Sondenrohr (1) verschiebbar in einer das Sondenrohr umgebenden Verschiebebuchse (4) angeordnet und gegenüber dieser mittels einer Klemmschraube (5) fixierbar ist zur Positionierung der Sonde (2) an einer gewünschten Stelle des Querschnittes eines Rauchgas-Kamines (17).

22. Vorrichtung nach Vorrichtungsanspruch 18,
**dadurch gekennzeichnet, daß**
im Kartuschenkasten (8) ein Kartuschensensor (15), insbesondere ein Federstabsensor, vorhanden ist, der das Entfernen bzw. Fehlen der Staubfilterkartusche (13) und/oder der Adsorberkartusche (14) registriert.

## Claims

1. A method of taking samples from waste gases which contain mediumly volatile and not easily volatile substances, in particular polychlorinated dibenzo(p)dioxins (PCDD) and polychlorinated dibenzo(p)furans (PCDF) in a gas, solid or aerosol phase, wherein a partial flow of gas is derived by a pump (26) from the waste gas and successively passed on the one hand by way of a dust filter cartridge (13) and on the other hand by way of an adsorber cartridge (14), wherein the partial flow does not experience any heating, in particular not prior to passing through the cartridges (13, 14), and condensate contained in the partial flow is separated from the partial flow after passing through the cartridges (13, 14),
**characterized in that** the condensate produced is determined in respect of quantity, in particular the quantity produced per unit of time, and is thereafter discharged into the main drainage system, wherein
- downstream of the cartridges (13, 14) the partial flow is cooled and **in that** case on the one hand a moisture-saturated partial flow of gas and on the other hand condensate are produced,
- the moisture-saturated cooled partial flow is measured in respect of its volume per unit of time for example by means of a gas meter (24),
- the moisture-saturated cooled partial flow of gas is determined in respect of its mass through-put per unit of time, and
- the moisture content of the waste gases is ascertained and to monitor the ascertained measurement values as a plausibility check the amount of condensate which occurs per unit of time is related to the ascertained mass through-put and/or volume through-put of the same unit of time and the moisture contained therein having regard to the partial flow of gas which is discharged into the environment and the residual moisture contained therein.

2. A method of taking samples from waste gases which contain mediumly volatile and not easily volatile substances, in particular polychlorinated dibenzo(p)dioxins (PCDD) and polychlorinated dibenzo(p)furans (PCDF) in a gas, solid or aerosol phase, wherein a partial flow of gas is derived by a pump (26) from the waste gas and successively passed on the one hand by way of a dust filter cartridge (13) and on the other hand by way of an adsorber cartridge (14), wherein the partial flow prior to being passed onto the cartridges (13, 14) is passed by way of a dust pre-filter (50) and condensate contained in the partial flow is separated from the partial flow after passing through the cartridges (13, 14),
**characterized in that** the condensate produced is determined in respect of quantity, in particular the quantity produced per unit of time, and is thereafter discharged into the main drainage system, wherein
- downstream of the cartridges (13, 14) the partial flow is cooled, in particular to ambient temperature or therebelow, and **in that** case on the one hand a moisture-saturated partial flow of gas and on the other hand condensate are produced,
- the moisture-saturated cooled partial flow is measured in respect of its volume per unit of time for example by means of a gas meter (24),
- the moisture-saturated cooled partial flow of gas is determined in respect of its mass through-put per unit of time, and
- the moisture content of the waste gases is ascertained and to monitor the ascertained measurement values as a plausibility check the amount of condensate which occurs per unit of time is related to the ascertained mass through-put and/or volume through-put of the same unit of time and the moisture contained therein having regard to the partial flow of gas which is discharged into the environment and the residual moisture contained therein.

3. A method as set forth in claim 2 **characterized in that**
- the partial flow of gas flows through the pre-filter (50) in the condensate-free condition and in particular the pre-filter (50) is heated, and especially
- heating of the partial flow of gas is effected in the pre-filter (50) to a temperature above the dew point, in particular to 100°C - 120°C, but not above 130°C.

4. A method as set forth in claim 2 or claim 3 **characterized in that** between the pre-filter (50) and the cartridges (13, 14) cooling of the partial flow to ≤ 60°C, in particular to a temperature which is not higher than the temperature of the waste gas, takes place.

5. A method as set forth in claims 2 through 4 **characterized in that**
- the pre-filter (50) which is enclosed by an inner housing (52) and same by an outer housing (53) is removed for evaluation together with the inner housing (52) from the outer housing (53) and taken to the location for evaluation after closure of the intake and outlet openings (54a, 54b), and especially
- temperature monitoring of the partial flow of gas is effected within the outer housing (53), downstream of the pre-filter (50), in particular outside the inner housing (52).

6. A method as set forth in claim 1 **characterized in that**
- condensate which occurs in the through-flow direction of the partial flow upstream of the cartridges (13, 14) is passed with the partial flow through the cartridges (13, 14), and especially
- cooling of the partial flow is effected in particular prior to passing through the cartridges (13, 14), in particular to less than or equal to 60°C.

7. A method as set forth in one of the preceding claims **characterized in that** when ascertaining the through-flow volume and/or the through-flow mass of the cooled partial flow the temperature and the pressure of said partial flow are ascertained.

8. A method as set forth in one of the preceding claims **characterized in that** at the suction removal location at which the partial flow of gas is sucked out of the waste gas the flow speed of the waste gas is ascertained and the pump (26) which sucks away the branched-off partial flow of gas is controlled using the ascertained mass through-put and/or volume through-put and the temperature measured **in that** case and the pressure measured **in that** case, in such a way that the speed of the branched-off partial flow of gas at the tapping location corresponds to the flow speed of the flue gas (18).

9. A method as set forth in one of the preceding claims **characterized in that** the condensate which occurs is put into intermediate storage and ascertained in respect of its amount by pumping away respective defined partial amounts, in particular in the form of pump strokes.

10. A method as set forth in one of the preceding claims **characterized in that** after insertion of a fresh cartridge (13, 14) the sealing integrity of the system is checked prior to any fresh sampling cycle by building up a reduced pressure by means of the pump (26) which conveys the partial flow of gas and closure of the system upstream of the cartridges (13, 14) and downstream of a condensate reservoir (19).

11. Apparatus for carrying out operations of taking samples from waste gases which contain mediumly volatile and not easily volatile substances, in particular polychlorinated dibenzo(p)dioxins (PCDD) and polychlorinated dibenzo(p)furans (PCDF) in a gas, solid or aerosol phase, where a partial flow of gas is derived from the waste gas by means of a at the front end of a probe tube (1) present probe (2) and fed by way of a conduit (11a, 11b, 11c) to a dust filter cartridge (13) and an adsorber cartridge (14), and from there to a partial flow pump (26), wherein the conduit (11a) between the probe (2) and the cartridges (13, 14) is kept as short as possible, **characterized in that**
- a heat exchanger (7) arranged in a conduit (11b) downstream the cartridges (13, 14) communicates with a condensate reservoir (19) which includes at least one maximum filling level limiting means and can be emptied into the main drainage system by means of a condensate pump (20) with a defined pump volume by way of a shut-off valve (23), wherein said condensate pump (20) is connected to a central control (30), and
- arranged in the conduit (11c) downstream of the heat exchanger (7) ), in particular upstream of the partial flow pump (26), is a volume flow meter, in particular a gas meter (24), and/or a mass flow meter (25),
- present at the position of the volume flow meter and/or the mass flow meter (25) is a temperature sensor and a pressure sensor for the partial flow, and
- the partial flow pump (26) is a pump with a defined stroke or delivery volume and there exist means for summation of the partial flow amount delivered per unit of time by the partial flow pump (26) and the central control (30) is foreseen to compare the summed partial flow amounts to the summed values of the volume flow meter and/or the mass flow meter (25) and to the amounts of condensate produced.

12. Apparatus for carrying out operations of taking samples from waste gases which contain mediumly volatile and not easily volatile substances, in particular polychlorinated dibenzo(p)dioxins (PCDD) and polychlorinated dibenzo(p)furans (PCDF) in a gas, solid or aerosol phase, where a partial flow of gas is derived from the waste gas by means of a the front end of a probe tube (1) present probe (2) and fed by way of a conduit (11a, 11b, 11c) to a dust filter cartridge (13) and an adsorber cartridge (14), and from there to a partial flow pump (26), wherein a dust pre-filter (50) is arranged between the probe (2) and the cartridges (13, 14) and the pre-filter (50) includes in particular a heating means (51), **characterized in that**
- a heat exchanger (7) arranged in the conduit (11b) downstream the cartridges (13, 14) communicates with a condensate reservoir (19) which includes at least one maximum filling level limiting means and can be emptied into the main drainage system by means of a condensate pump (20) with a defined pump volume by way of a shut-off valve (23), wherein said condensate pump (20) is connected to a central control (30), and
- arranged in the conduit (11c) downstream of the heat exchanger (7), in particular upstream of the partial flow pump (26), is a volume flow meter, in particular a gas meter (24), and/or a mass flow meter (25),
- present at the position of the volume flow meter and/or the mass flow meter (25) is a temperature sensor and a pressure sensor for the partial flow, and
- the partial flow pump (26) is a pump with a defined stroke or delivery volume and there exist means for summation of the partial flow amount delivered per unit of time by the partial flow pump (26) and the central control (30) is foreseen to compare the summed partial flow amounts to the summed values of the volume flow meter and/or the mass flow meter (25) and to the amounts of condensate produced.

13. Apparatus as set forth in claim 12 **characterized in that**
- the pre-filter (50) is arranged directly downstream of the probe (2), in the through-flow direction of the partial flow of gas, in particular directly on the downstream end of the probe tube (1), and especially
- the pre-filter (50) which in particular is in the commercially available form of a torus of rectangular cross-sectional area is accommodated in an inner housing (52) which has intake and outlet openings (54a, 54b), wherein the inner housing (52) is enclosed by an outer housing (53) with intake and outlet openings (55a, 55b).

14. Apparatus as set forth in apparatus claim 13 **characterized in that**
- arranged in the outer housing (53), outside the inner housing (52), is a heating means (51), in particular an electrical heating means (51), and/or a temperature sensor (56), in particular in the path of flow of the partial flow of gas, in particular downstream of the pre-filter (50) and especially
- the outer housing (53) includes an end flange (53a) on the intake end, which in the center has the intake opening (55a) in the form of an intake connection which can be sealingly fitted onto and fixed on the outside diameter of the probe tube (1).

15. Apparatus as set forth in one of apparatus claims 13 or 14 **characterized in that**
- the outer housing (53) comprises two half-shell portions (53c, 53d) which can be pivoted relative to each about a generatrix by way of hinges (57), the one half-shell portion (53d) being fixedly connected to the flange (53a), and especially
- a conduit (58) for the partial flow of gas which leads outwardly through the outer housing (53) from the inner housing (52) is taken outwardly on the contact plane (59) of the two half-shell portions (53c, 53d) of the outer housing (53) so that, after opening of the outer housing and release of a screw connection (61) between the conduit (58) and the inner housing (52), the conduit (58) is removable from the outer housing (53).

16. Apparatus as set forth in claim 15 **characterized in that** the temperature sensor (56) can be screwed into the conduit (58) and the conduit (58) is in particular in the form of a T-piece of which one end includes the screw means (61) in relation to the inner housing (52), the second end includes the screwed-in sensor (56) and the third end includes a screw connection (62) for the ongoing conduit.

17. Apparatus as set forth in one of apparatus claims 15 or 16 **characterized in that**
- the inner housing (52) can be sealingly fitted in particular with its end flange (52a) on the free end of the probe tube (1) and on the opposite disposed end the axial free space between the inner housing (52) and the outer housing (53) after removal of the conduit (58) is sufficient for axially withdrawing the complete inner housing (52) from the probe tube (1), and especially
- the probe tube (2) is suitable to extend through a wall (17) of a flue gas chimney and the probe tube (1) is in the form of a double-wall tube whose hollow space between the inner and outer casings communicates with a first heat exchanger (6).

18. Apparatus as set forth in one of apparatus claims 13 or 17 **characterized in that**
- the dust filter cartridge (13) and the adsorber cartridge (14) are arranged one after the other and disposed jointly in a cartridge box (8) in which an actuable shut-off valve (12) is additionally arranged upstream of the cartridges, and especially
- the cartridge box (8) is arranged as closely as possible to and in particular directly at the outlet end of the probe tube (1), and especially
- the central control (30) is laid out to transfer all measurement values ascertained during a sampling procedure onto a data carrier, in particular an electronic data carrier (28), which together with the cartridges (13, 14) at the end of the sampling can be delivered to the laboratory evaluating the cartridges.

19. Apparatus as set forth in one of apparatus claims 13 or 17 through 18 **characterized in that**
- the central control is arranged in a measurement cabinet (9) spaced with respect to the cartridge box (8), and especially
- the central control (30) drives the partial flow pump (26) by way of a regulatable motor (22).

20. Apparatus as set forth in one of the preceding apparatus claims **characterized in that** a pivot tube (16) for determining the flow speed of the exhaust gases is arranged at the probe tube (1) at the front end, in particular as closely as possible to the probe (2).

21. Apparatus as set forth in one of the preceding apparatus claims **characterized in that** the probe tube (1) is arranged displaceably in a displacement sleeve (4) surrounding the probe tube and is fixable in relation thereto by means of a clamping screw (5) for positioning the probe (2) at a desired location of the cross-section of a flue gas chimney (17).

22. Apparatus as set forth in apparatus claim 18 **characterized in that** a cartridge sensor (15), in particular a spring bar sensor, is present in the cartridge box (8), said sensor recording the removal of or the absence of the dust filter cartridge (13) and/or the adsorber cartridge (14).

## Revendications

1. Procédé pour le prélèvement d'échantillons des gaz d'échappement, qui contiennent des substances moyennement et difficilement volatiles, notamment de la dibenzo-p-dioxine polychlorée (PCDD) et du dibenzofuranne polychloré (PCDF) en phase gazeuse, solide ou d'aérosol, où un courant partiel de gaz est extrait dudit gaz d'échappement au moyen d'une pompe (26), et dirigé consécutivement d'un part par une cartouche à filtre de poussière (13) et d'autre part par une cartouche absorbante (14), où le courant partiel n'est pas soumis au chauffage, notamment pas avant le passage par les cartouches (13, 14), et après le passage par lesdites cartouches (13, 14), la condensation contenue dans le courant partiel est séparée dudit courant partiel **caractérisé en ce que** la condensation résultée est déterminée du point de vue de la quantité, notamment de la quantité résultée par unité de temps, étant par suite évacuée dans la canalisation, où
- en aval des cartouches (13, 14), le courant partiel est refroidi, un courant partiel de gaz saturé d'humidité d'une part et de la condensation d'autre part étant créés à cet endroit
- le courant partiel de gaz saturé d'humidité une fois refroidi, l'on procède au mesurage de son volume par unité de temps, par exemple au moyen d'un compteur de gaz (24),
- le courant partiel de gaz saturé d'humidité une fois refroidi, l'on procède à la détermination de son débit de masse par unité de temps, et où
- l'on procède à la détermination de la teneur en humidité du gaz d'échappement et pour le contrôle des valeurs de mesurage résultées, l'on emploie en tant que vérification de la plausibilité la quantité de condensation résultée en une unité de temps par rapport au débit de masse et/ou au débit de volume résulté dans la même unité de temps, et de l'humidité qu'il contient, compte tenu du courant partiel de gaz évacué dans le milieu environnant et de l'humidité résiduelle contenue dans celui-ci.

2. Procédé pour le prélèvement d'échantillons des gaz d'échappement qui contiennent des substances moyennement et difficilement volatiles, notamment de la dibenzo-p-dioxine polychlorée (PCDD) et du dibenzofuranne polychloré (PCDF) en phase gazeuse, solide ou d'aérosol, où un courant partiel de gaz est extrait dudit gaz d'échappement au moyen d'une pompe (26), et dirigé consécutivement d'un part par une cartouche à filtre de poussière (13) et d'autre part par une cartouche absorbante (14), où, avant le passage par lesdites cartouches (13, 14), le courant partiel est dirigé par un pré-filtre (50) à poussière, et après le passage par lesdites cartouches (13, 14), la condensation contenue dans le courant partiel est séparée dudit courant partiel **caractérisé en ce que** la condensation résultée est déterminée du point de vue de la quantité, notamment de la quantité résultée par unité de temps, étant ensuite évacuée dans la canalisation, où
- en aval des cartouches (13, 14), le courant partiel est refroidi, notamment jusqu'à la température ambiante ou à une température inférieure, et à cet endroit un courant partiel de gaz saturé d'humidité d'une part et de la condensation d'autre part sont créés,
- le courant partiel de gaz saturé d'humidité une fois refroidi, l'on procède au mesurage de son volume par unité de temps, par exemple au moyen d'un compteur de gaz (24),
- le courant partiel de gaz saturé d'humidité une fois refroidi, l'on procède à la détermination de son débit de masse par unité de temps, et où
- l'on procède à la détermination de la teneur en humidité du gaz d'échappement et, pour le contrôle des valeurs de mesurage résultées, l'on emploie en tant que vérification de la plausibilité la quantité de condensation résultée en une unité de temps par rapport au débit de masse et/ou au débit de volume résulté dans la même unité de temps, et de l'humidité contenue dans celui-ci, compte tenu du courant partiel de gaz évacué dans le milieu environnant et de l'humidité résiduelle contenue dans celui-ci.

3. Procédé selon la revendication 2, **caractérisé en ce que**
- le pré-filtre (50) est traversé par le courant partiel de gaz à l'état de manque de condensation, ledit pré-filtre (50) étant notamment chauffé, et notamment
- le chauffage du courant partiel de gaz se trouvant dans le pré-filtre (50) se fait à une température supérieure à la température de rosée, notamment à 100°C - 120°C, mais inférieure à 130°C.

4. Procédé selon l'une des revendications 2 ou 3, **caractérisé en ce que** entre le pré-filtre (50) et les cartouches (13, 14) a lieu un refroidissement du courant partiel de gaz jusqu'à une température inférieure ou égale à 60°C, notamment à une température qui n'est pas supérieure à celle du gaz d'échappement.

5. Procédé selon les revendications 2 à 4, **caractérisé en ce que**
- le pré-filtre (50), qui est inséré dans un boîtier interne (52) à son tour inséré dans un boîtier externe (53), est sorti avec le boîtier (52) du boîtier (53) en vue de sa valorisation et, après fermeture des orifices d'entrée et de sortie (54a, 54b), il est transporté à l'endroit de valorisation, et notamment
- à l'intérieur du boîtier externe (53), en aval du pré-filtre (50), notamment à l'extérieur du boîtier interne (52), l'on procède à une surveillance de la température du courant partiel de gaz.

6. Procédé selon la revendication 1, **caractérisé en ce que**
- la condensation résultée en amont des cartouches (13, 14) dans la direction d'écoulement du courant partiel sera dirigée par lesdites cartouches (13, 14) avec le courant partiel, et notamment
- un refroidissement du courant partiel a lieu, notamment avant le passage par les cartouches (13, 14), notamment à une température inférieure ou égale à 60°C.

7. Procédé selon l'une des revendications précédentes, **caractérisé en ce que** lors de la détermination du débit de volume et/ou du débit de masse du courant partiel refroidi, l'on procède à la détermination de la température et de la pression dudit courant partiel.

8. Procédé selon l'une des revendications précédentes, **caractérisé en ce que** au point d'aspiration du courant partiel de gaz du gaz d'échappement, l'on procède à la détermination de la vitesse du courant de gaz d'échappement et, par l'utilisation du débit de masse et/ou du débit de volume déterminés et de la température mesurée à cet endroit ainsi que de la pression mesurée à cet endroit, la pompe (26) qui aspire le courant partiel de gaz dévié sera commandée de façon à ce que la vitesse du courant partiel de gaz dévié au point de collection corresponde à la vitesse du courant du gaz de combustion (18).

9. Procédé selon l'une des revendications précédentes, **caractérisé en ce que** la condensation résultée est stockée temporairement et l'on procède à la détermination de sa quantité par le pompage de quantités établies, notamment sous forme de courses de pompe.

10. Procédé selon l'une des revendications précédentes, **caractérisé en ce que** après insertion de nouvelles cartouches (13, 14), l'on procède à une vérification de l'étanchéité du système avant chaque nouveau cycle de collection d'échantillons, par production d'un vide au moyen de la pompe (26) qui entraîne le courant partiel de gaz et par fermeture du système en amont des cartouches (13, 14) et an aval d'un récipient de condensation (19).

11. Dispositif pour le prélèvement d'échantillons des gaz d'échappement qui contiennent des substances moyennement et difficilement volatiles, notamment de la dibenzo-p-dioxine polychlorée (PCDD) et du dibenzofuranne polychloré (PCDF) en phase gazeuse, solide ou d'aérosol, où un courant partiel de gaz est prélevé du gaz d'échappement au moyen d'un échantillonneur (2) se trouvant à l'extrémité avant d'un conduit (1) de l'échantillonneur, et dirigé par une conduite (11a, 11b, 11c), par une cartouche à filtre de poussière (13) et par une cartouche absorbante (14), ainsi que par une pompe de courant partiel (26), où le conduit (11a) se trouvant entre l'échantillonneur (2) et les cartouches (13, 14) est maintenu le plus court possible, **caractérisé en ce que** un échangeur de chaleur (7) disposé dans le conduit (11b) en aval des cartouches (13, 14) est raccordé à un récipient de condensation (19) qui contient au moins un limiteur d'état de remplissage maximal et qui peut être déversé dans la canalisation par une soupape d'arrêt (23) au moyen d'une pompe de condensation (20) ayant un volume de pompage défini, où ladite pompe de condensation (20) est connectée à une unité centrale de commande (30), et
- dans le conduit (11c), en aval de l'échangeur de chaleur (7), notamment en amont de la pompe de courant partiel (26), se trouve un appareil de mesure du débit de volume, notamment un compteur de gaz (24), et/ou un appareil de mesure du débit de masse (25),
- à l'endroit de disposition de l'appareil de mesure du débit de volume et/ou de l'appareil de mesure du débit de masse (25), un capteur de température ainsi qu'un capteur de pression pour le courant partiel sont prévus, et
- la pompe de courant partiel (26) est une pompe à volume de course respectivement de pompage définis, des moyens pour l'addition des quantités de courant partiel dirigées par la pompe de courant partiel (26) en une unité de temps étant prévus, tandis que l'unité centrale de commande (30) a pour tâche de comparer les quantités de courant partiel additionnées, d'une part aux valeurs additionnées de l'appareil de mesure du débit de volume et/ou de l'appareil de mesure du débit de masse (25) ainsi qu'aux quantités de condensation résultées.

12. Dispositif pour le prélèvement d'échantillons des gaz d'échappement qui contiennent des substances moyennement et difficilement volatiles, notamment de la dibenzo-p-dioxine polychlorée (PCDD) et du dibenzofuranne polychloré (PCDF) en phase gazeuse, solide ou d'aérosol, où un courant partiel de gaz est prélevé du gaz d'échappement au moyen d'un échantillonneur (2) se trouvant à l'extrémité avant d'un conduit (1) de l'échantillonneur, et dirigé par un conduit (11a, 11b, 11c), par une cartouche à filtre de poussière (13) et par une cartouche absorbante (14), ainsi que par une pompe de courant partiel (26), où un pré-filtre (50) à poussière est disposé entre l'échantillonneur (2) et les cartouches (13, 14), ledit pré-filtre (50) contenant notamment un appareil de réchauffage (51),
**caractérisé en ce que** un échangeur de chaleur (7) disposé dans le conduit (11b) en aval des cartouches (13, 14) est raccordé à un récipient de condensation (19) qui contient au moins un limiteur d'état de remplissage maximal et qui peut être déversé dans la canalisation par une soupape d'arrêt (23) au moyen d'une pompe de condensation (20) ayant un volume de pompage défini, où ladite pompe de condensation (20) est liée à une unité centrale de commande (30), et
- dans le conduit (11c), en aval de l'échangeur de chaleur (7), notamment en amont de la pompe de courant partiel (26), se trouve un appareil de mesure du débit de volume, notamment un compteur de gaz (24) et/ou un appareil de mesure du débit de masse (25),
- à l'endroit disposition de l'appareil de mesure du débit de volume et/ou de l'appareil de mesure du débit de masse (25) se trouve un capteur de température ainsi qu'un capteur de pression pour le courant partiel, et
- la pompe de courant partiel (26) est une pompe à volume de course respectivement de pompage définis, des moyens d'additionner les quantités de courant partiel dirigées par la pompe de courant partiel (26) en une unité de temps étant prévus, tandis que l'unité centrale de commande (30) a pour tâche de comparer les quantités de courant partiel additionnées d'une part aux valeurs additionnées de l'appareil de mesure du débit de volume et/ou de l'appareil de mesure du débit de masse (25) ainsi qu'aux quantités de condensation résultées.

13. Dispositif selon la revendication 12, **caractérisé en ce que**
- dans la direction d'écoulement du courant partiel de gaz, le pré-filtre (50) est disposé immédiatement en aval de l'échantillonneur (2), notamment directement sur l'extrémité postérieure du conduit (1) de l'échantillonneur, et notamment
- le pré-filtre (50) qui se présente sous la forme d'un tore à surfaces rectangulaires en section transversale, est inséré dans un boîtier interne (52) prévu avec des orifices d'entrée et de sortie (54a, 54b), où ledit boîtier interne (52) est à son tour inséré dans un boîtier externe (53) présentant des orifices d'entrée et de sortie (55a, 55b).

14. Dispositif selon la revendication 13, **caractérisé en ce que**
- dans le boîtier externe (53), à l'extérieur du boîtier interne (52), se trouve un appareil de réchauffage (51), notamment un appareil de réchauffage (51) électrique et/ou un capteur de température (56), notamment sur le trajet du courant partiel de gaz, notamment en aval du pré-filtre (50), et notamment
- le boîtier externe (53) comporte sur la partie d'entrée un rebord (53a) frontal, prévu au centre avec un orifice d'entrée (55a) sous forme d'une tubulure d'entrée, qui peut être tirée et fixée sur le diamètre externe du conduit (1) de l'échantillonneur.

15. Dispositif selon l'une des revendications de dispositif 13 ou 14,
**caractérisé en ce que**
- le boîtier externe (53) consiste en deux moitiés de boîtier (53d, 53d'), rabattables l'une par rapport à l'autre autour d'une génératrice au moyen des charnières (57), où l'une des moitiés de boîtier (53d) est liée de manière rigide avec le rebord (53a), et notamment
- un conduit (58) qui dirige le courant partiel de gaz depuis le boîtier interne (52) par le boîtier externe (53) vers l'extérieur sort vers l'extérieur sur le plan de contact (59) des deux moitiés de boîtier (53d, 53d'), de sorte qu'après ouverture du boîtier externe et démontage d'une liaison par vis (61) entre le conduit (58) et le boîtier interne (52), ledit conduit (58) peut être ôté du boîtier externe (53).

16. Dispositif selon la revendication de dispositif 15, **caractérisé en ce que** dans le conduit (58) un capteur de température (56) peut être vissé et le conduit (58) se présente notamment sous la forme d'un tube en T dont l'une des extrémités contient le vissage (61) au boîtier interne (52), une deuxième extrémité contenant le capteur (56) vissé, et la troisième extrémité contenant la liaison par vis (62) vers le conduit qui se prolonge depuis cet endroit.

17. Dispositif selon l'une des revendications de dispositif 15 ou 16,
**caractérisé en ce que**
- le boîtier interne (52), et notamment son rebord (52a) frontal peut être inséré de manière étanche sur l'extrémité libre de la conduite (1) de l'échantillonneur, et à l'extrémité opposée, l'espace axial libre entre le boîtier interne (52) et le boîtier externe (53) est suffisamment grand pour sortir en direction axiale l'entier boîtier interne (52) du conduit (1) de l'échantillonneur, et notamment
- la conduite de l'échantillonneur peut être proprement insérée par une paroi (17) d'une cheminée pour les gaz de combustion, et le conduit (1) de l'échantillonneur se présente sous la forme d'un conduit à double paroi, dont la cavité entre le revêtement interne et celui externe est liée à un échangeur de chaleur primaire (6).

18. Dispositif selon l'une des revendications de dispositif 13 ou 17,
**caractérisé en ce que**
- la cartouche à filtre de poussière (13) et la cartouche absorbante (14) sont disposées l'une après l'autre et sont insérées ensemble dans une boîte à cartouches (8), une soupape d'arrêt (12) pouvant être commandée étant prévue de manière supplémentaire en amont des cartouches, et notamment
- la boîte à cartouches (8) est disposée le plus près possible, notamment directement de l'extrémité de sortie du conduit (1) de l'échantillonneur, et notamment
- l'unité centrale de commande (30) a pour tâche de copier toutes les valeurs de mesure déterminées durant le prélèvement d'échantillons, sur un support de données, notamment sur un support électronique de données (28), qui, à la fin du prélèvement d'échantillons, peut, avec les cartouches (13, 14), être envoyé au laboratoire de valorisation des cartouches.

19. Dispositif selon l'une des revendications de dispositif 13 ou 17 à 18,
**caractérisé en ce que**
- l'unité centrale de commande est disposée dans une armoire de mesurage (9) placée à distance par rapport à la boîte à cartouches (8), et notamment
- l'unité centrale de commande (30) commande la pompe de courant partiel (26) au moyen d'un moteur (22) réglable.

20. Dispositif selon l'une des revendications de dispositif précédentes,
**caractérisé en ce que** à l'extrémité avant du conduit (1) de l'échantillonneur, notamment le plus près possible dudit échantillonneur (2) se trouve un tube de Prandtl (16) pour la détermination de la vitesse du courant des gaz d'échappement.

21. Dispositif selon l'une des revendications de dispositif précédentes,
**caractérisé en ce que** le conduit (1) de l'échantillonneur est disposé de manière coulissante dans un manchon de coulissement (4) se trouvant autour du conduit de l'échantillonneur et il peut être fixé audit manchon au moyen d'une vis de serrage (5) pour le positionnement de l'échantillonneur (2) dans un point choisi de la section transversale d'une cheminée pour les gaz brûlés (17).

22. Dispositif selon la revendication de dispositif 18, **caractérisé en ce que** dans la boîte à cartouches (8) se trouve un capteur de cartouche (15), notamment un capteur de type barre de torsion, destiné à enregistrer l'éloignement, respectivement l'absence de la cartouche à filtre de poussière (13) et/ou de la cartouche absorbante (14).
